(19) Europäisches Patentamt
European Patent Office
Office européen des brevets

(11) Veröffentlichungsnummer: **0 507 167 A2**

# (12) EUROPÄISCHE PATENTANMELDUNG

(21) Anmeldenummer: **92104958.1**

(22) Anmeldetag: **23.03.92**

(51) Int. Cl.5: **F23J 11/00**, F23J 15/00,
F24H 8/00

(30) Priorität: **27.03.91 CH 932/91**

(43) Veröffentlichungstag der Anmeldung:
**07.10.92 Patentblatt 92/41**

(84) Benannte Vertragsstaaten:
**AT BE CH DE DK ES FR GB GR IT LI LU NL SE**

(71) Anmelder: **Gelewski, Winfried**
**Weinhaldenstrasse 4**
**CH-9403 Goldach(CH)**

(72) Erfinder: **Gelewski, Winfried**
**Weinhaldenstrasse 4**
**CH-9403 Goldach(CH)**

(74) Vertreter: **Römpler, Aldo et al**
**Patentanwälte Georg Römpler und Aldo**
**Römpler Schützengasse 34 Postfach 148**
**CH-9410 Heiden(CH)**

(54) **Rauchgasführung an einem Heizkessel.**

(57) Das in der Brennkammer (2) entstehende Rauchgas wird vom Heizkessel (3) mittels einer Rauchgasleitung (1) weggeleitet, die einen Wärmetauscher (4) aufweist. Die Rauchgasleitung (1) ist derart zick-zack-förmig durch diesen hindurchgeführt, dass eine wiederholte Strömungsumlenkung des in ihr geführten Rauchgases erfolgt. Hierdurch ergibt sich nicht nur eine bessere Wärmeübertragung, sondern auch eine für die Rauchgasreinigung wichtige Verwirbelung des Rauchgases und eine Fliehkraft-Abscheidung der festen Verunreinigungen. Mittels einer Düse (7) ist kaltes Wasser in den Rauchgasstrom einsprühbar, wodurch eine weitere Abkühlung des Rauchgases erreicht wird und eine Rauchgaswäsche erfolgt. Das Wasser kann mittels einem Wasserabscheider (8) abgeleitet werden, der ein Filter (10) aufweist. Ein Sauggebläse (9) dient als Tropfenabscheider. Die über eine Vorlaufleitung (5) vom Heizkessel (3) kommende Heizkreislauf-Flüssigkeit ist, bevor sie kalt über die Rücklaufleitung (6) wieder zurückkommt, durch den Wärmetauscher (4) hindurchgeführt. Dadurch, dass eine starke Abkühlung des Rauchgases gewährleistet ist, kann die Rauchgasleitung (1) aus Kunststoff bestehen.

FIG.1

EP 0 507 167 A2

Die vorliegende Erfindung betrifft eine Rauchgasführung an einem Heizkessel.

Es ist eine Vielzahl von Heizkesseln, insbesondere für Heizungsanlagen, bekannt. Sie weisen Anschlüsse an einen Heizkreislauf auf, welcher Heizkreislauf beispielsweise Heizkörper oder Bodenheizungselemente beinhaltet. Der Heizkessel selbst besteht aus einer Brennkammer, die nach Art eines Wärmetauschers mit einem das wärmeleitende Medium des Heizkreislaufes enthaltenden Kessel in Verbindung steht. Als wärmeleitendes Medium dient meistens Glykol enthaltendes Wasser. Das in der Brennkammer entstehende Rauchgas wird über eine Rauchgasführung zum Rauchabzugskamin geleitet.

Die Erfindung bezweckt eine Rauchgasführung zu schaffen, die eine Absenkung der Rauchgastemperatur bewirkt und eine Verringerung der Giftstoffe im Rauchgas ermöglicht.

Die erfindungsgemässe Rauchgasführung entspricht den kennzeichnenden Merkmalen des Patentanspruchs 1.

Durch die besondere Gestaltung der Rauchgasführung ergibt sich nicht nur eine bessere Wärmeübertragung aus dem Inneren der Rauchgasleitung nach aussen, was zu einer grösseren Temperaturabsenkung des Rauchgases führt, sondern es wird auch eine Verwirbelung des Rauchgases bewirkt. Hierdurch werden die verschiedenen Giftstoffe in molekulare Unruhe versetzt, so dass eine teilweise Aufspaltung der einzelnen Moleküle stattfindet.

Die Absenkung der Rauchgastemperatur, wie sie insbesondere durch die Ausführung gemäss Anspruch 2 wirksam erfolgen kann, ermöglicht die Verwendung einer Rauchgasleitung aus Kunststoff oder mindestens mit kunststoffbeschichteter Innenwandung. Hierdurch kann zusätzlich eine Rauchgaswäsche durch Einsprühen von Wasser erfolgen, ohne dass Korrosionsprobleme auftauchen können. Ernsthafte Korrosionsprobleme haben bisher die Bereitstellung von Heizungsanlagen, die eine wirksame Rauchgaskühlung und/oder eine Rauchgaswäsche vorsehen verunmöglicht, da diese sich der Beanspruchung, wie sie im normalen Heizbetrieb vorkommt, nicht gewachsen gezeigt haben.

Für die Herstellung der Rauchgasleitung sowie allfälliger sonstiger Teile, die mit dem Rauchgas in Verbindung kommen, eignet sich vorzugsweise fluorhaltiger Kunststoff, insbesondere Polytetrafluorethylen. Neben Polytetrafluorethylen sind aufgrund der Wärmebeständigkeit und der Wärmeleitfähigkeit beispielsweise auch Polyvinylidenfluorid, Polyfluoramid oder auch Polycarbonat und Polypropylen geeignet.

Durch das Eindüsen von kaltem Wasser in den Rauchgasstrom, wie dies in Anspruch 6 vorgesehen ist, wird der Oxidationsvorgang freigesetzt, durch den verschiedene Giftstoffe, wie CO, $SO_2$, $NO_x$ und $CO_2$, reduziert werden. Das $CO_2$ wird durch diesen Prozess um ca 1/3 reduziert und kann als Kohlensäure über einen Filter ins Abwasser geleitet werden. Der Rest vom $SO_2$ der nicht beim Verbrennungsprozess als elementarer Schwefel anfällt, wird durch den Waschprozess in den angesprochenen Filter befördert und mit Magnesium-Calzium-Granulat durch Berührung mit Wasser in Magnesiumsulfat ($Mg\ SO_4$) mit einem PH-Wert von ca 6,5 bis 7,5 umgewandelt.

Nachfolgend wird anhand der Zeichnung ein Ausführungsbeispiel des Erfindungsgegenstandes näher beschrieben:

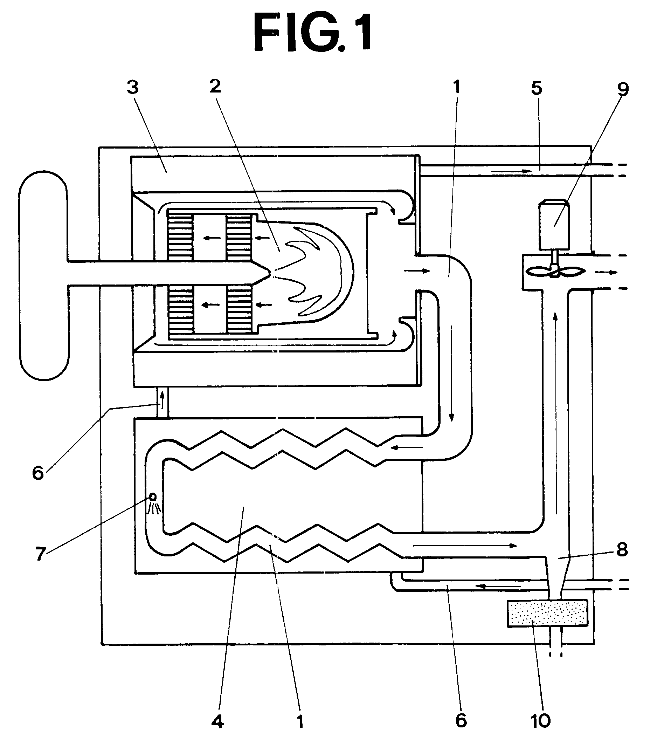

Fig. 1     zeigt eine schematische Ansicht der Rauchgasführung, zusammen mit den zu deren Erläuterung wesentlichen Teilen einer Heizungsanlage,

Fig. 2     zeigt das die Rauchgasleitung umgebende Wärmetauscher-Gehäuse, und

Fig. 3     zeigt ein Teilstück der im Wärmetauscher-Gehäuse nach Fig. 2 angeordneten Rauchgasleitung.

Mit der Rauchgasleitung 1 wird das in der Brennkammer 2 entstehende Rauchgas vom Heizkessel 3 weggeleitet und einem Wärmetauscher 4 zugeführt. Das Rauchgas hat beim Verlassen des Heizkessels eine Temperatur von 150° bis 250° C. Der Wärmetauscher besteht aus einem Behälter, vorzugsweise ein Druckbehälter aus V2A-Stahl, durch welchen die Rauchgasleitung 1, wie schematisch angedeutet, derart zick-zack-förmig hindurchgeführt ist, dass eine wiederholte Strömungsumlenkung des in ihr geführten Rauchgases erfolgt. Durch diese besondere Gestaltung der Rauchgasleitung ergibt sich nicht nur eine bessere Wärmeübertragung, sondern auch eine Verwirbelung des Rauchgases.

Der Heizkessel 3 ist wie üblich mit einem Heizkreislauf verbunden, welcher eine Vorlaufleitung 5 und eine Rücklaufleitung 6 aufweist. In diesem Heizkreislauf wird eine wärmeleitende Flüssigkeit geführt, vorzugsweise Glykol enthaltendes Wasser. Die Rücklaufleitung 6 ist auf der einen Seite in den Druckbehälter des Wärmetauschers 4 hineingeführt und auf der anderen Seite wieder aus diesem heraus und in den Heizkessel 3 geführt. Der Druckbehälter des Wärmetauschers 4 ist also Teil der Rücklaufleitung 6. Hierdurch ergeben sich folgende Vorteile: Erstens wird die Abgaswärme zurückgewonnen, zweitens wird das Rücklaufwasser vor dem Erreichen des Heizkessels 3 bereits auf eine Temperatur von 50° bis 55° C vorgewärmt, wodurch eine Versottung des Heizkessels verhindert wird. Eine besondere Vorwärmeinrichtung ist also nicht mehr erforderlich. Das besonders im Fall einer Bodenheizung relativ kalte Rücklaufwasser, bewirkt in diesem Wärmetauscher eine sofortige starke Abkühlung des Rauchgases bis unter den Wassertaupunkt.

Mittels einer Düse 7, welche vorzugsweise aus demselben Werk stoff wie die Rauchgasleitung 1 besteht, wird kaltes Wasser in den Rauchgasstrom eingesprüht, wodurch eine weitere Abkühlung des Rauchgases erreicht wird. Durch dieses eingesprühte Wasser werden Staubteilchen, d.h. feste Verunreinigungen, aus dem Rauchgas ausgewaschen. Diese festen Verunreinigungen im Rauchgas unterliegen in der Strömungsumlenkungen aufweisenden Rauchgasleitung 1 einer Fliehkraft-Abscheidung, indem sie auszentrifugieren und gegen die Innenwandung der Rauchgasleitung 1 geschleudert werden, wo sie ausgewaschen werden. Ausserdem wird durch das Einsprühen von Wasser, wie vorgehend schon beschrieben, der Oxidationsvorgang freigesetzt.

Zum Entfernen des Wassers ist im weiteren Verlauf der Rauchgasleitung 1 ein Wasserabscheider 8 in Form eines Auslaufstutzens vorgesehen. Im Bereich dieses Wasserabscheiders ist die Rauchgasleitung 1 vertikal nach oben geführt. Anders als hier dargestellt, kann das vertikale Teilstück ebenfalls zick-zack-förmig gestaltet sein und als Tropfenabscheider dienen. Am oberen Ende dieses vertikalen Teilstücks, ist zum Weitertransport des Reingases ein Sauggebläse 9 angeordnet. Dem Wasserabscheider ist ausserdem ein Filter 10 zugeordnet, zum Ausfiltern und/oder chemischen Umwandeln der im Rauchgas enthaltenen Giftstoffe.

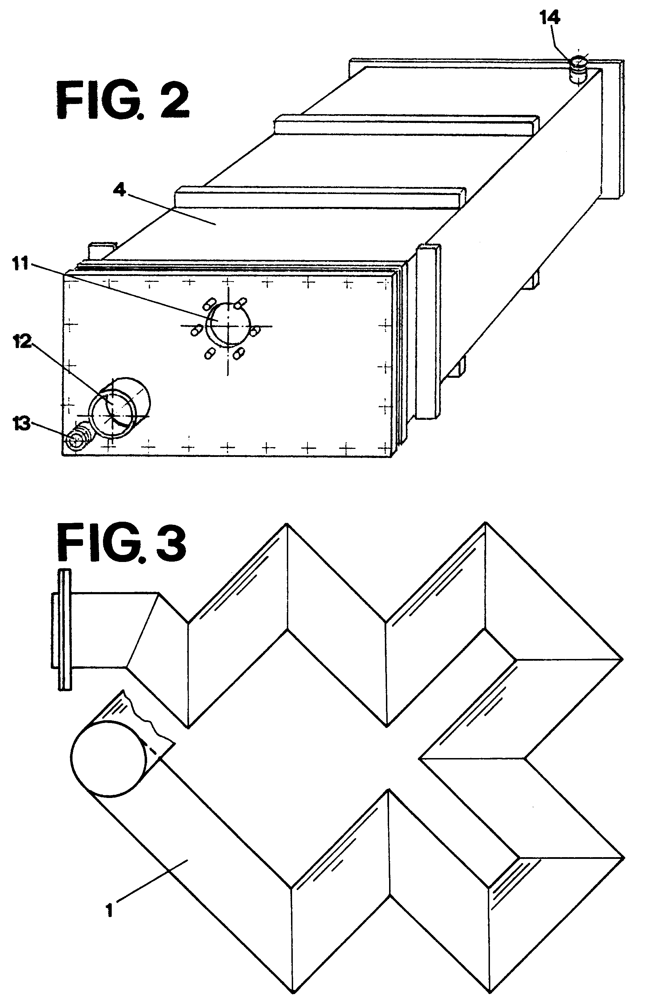

In Fig. 2 ist insbesondere der die Rauchgasleitung 1 umgebende Behälter des Wärmetauschers 4 veranschaulicht. Dessen Gehäuse ist aussen mit Verstärkungsstreben versehen und weist eine Eingangsöffnung 11 und eine Ausgangsöffnung 12 auf, an welche die Rauchgasleitung 1 angeschlossen werden kann sowie einen Eingangsstutzen 13 und Ausgangsstutzen 14 für die Rücklaufleitung 6. Dieser Druckbehälter ist mit einem Druck von 4 bar beanspruchbar. In seinem Innern ist das Wärmetauscher-Teilstück der Rauchgasleitung 1 angeordnet. Letzteres, bzw. ein Teil davon, ist aus der Draufsicht in Fig. 3 ersichtlich. Die Rauchgasleitung 1 ist hier mehrfach zick-zack-förmig jeweils in einen Winkel von 90° geknickt. Diese Rohrschlange wiederholt sich in ähnlicher Weise mindestens ein weiteres mal auf mindestens einer weiteren Ebene, bevor die Rauchgasleitung 1 den Druckbehälter des Wärmetauschers 4 wieder verlässt. Das Wärmetauscher-Teilstück der Rauchgasleitung 1 ist am Druckbehälter angeflanscht.

Die hier dargestellte Ausführung des Wärmetauschers 4, ist insbesondere dazu bestimmt, sokkelartig unter den Heizkessel 3 eingebaut zu werden und eignet sich daher für fabrikseitig vorgefertigte komplette Anlagen. Es sind daneben jedoch auch andere Ausführungen denkbar, welche für die Nachrüstung von bereits bestehenden Heizkesseln besser geeignet sind. Hierbei könnte beispielsweise der Wärmetauscher 4 so ausgelegt werden, dass er vertikal hinter den Heizkessel montierbar und mittels einem kurzen Zwischenstück an dessen Rauchgasstutzen anschliessbar ist.

Für das weitere Ableiten des nun gekühlten und gereinigten Rauchgases wird kein herkömmliches Kamin mehr benötigt. Es reicht eine Verlängerung der Kunststoff-Rauchgasleitung 1. Es ist hierzu auch möglich, vorhandene Kamine durch Einziehen einer flexiblen Kunststoff-Rauchgasleitung mit einem Durchmesser von beispielsweise 75, 110, 125 oder 160 mm in die neue Anlage einzubeziehen.

**Patentansprüche**

1. Rauchgasführung an einem Heizkessel, dadurch gekennzeichnet, dass diese Mittel zur Absenkung der Rauchgastemperatur und Mittel zur wiederholten Strömungsumlenkung des in einer Rauchgasleitung (1) geführten Rauchgases aufweist, wodurch einerseits eine Vergrösserung der Wärmeübertragungsfläche und andererseits eine Verwirbelung des Rauchgases bewirkt wird.

2. Rauchgasführung nach Anspruch 1, dadurch gekennzeichnet, dass die Mittel zur Absenkung der Rauchgastemperatur aus einem Wärmetauscher (4) bestehen, der aus einem Behälter gebildet wird, durch welchen die Rauchgasleitung (1) hindurchgeführt wird und welcher Behälter mit der Rücklaufleitung (6) des Heizkessels (3) derart in Verbindung steht, dass die im Heizkreislauf enthaltene Flüssigkeit durch diesen hindurchgeführt ist.

3. Rauchgasführung nach einem der Ansprüche 1 oder 2, dadurch gekennzeichnet, dass mindestens die Innenwandung der Rauchgasleitung (1) aus einem Kunststoff besteht oder Kunststoffbeschichtet ist.

4. Rauchgasführung nach Anspruch 3, dadurch gekennzeichnet, dass die Innenwandung der Rauchgasleitung (1) aus einem fluorhaltigen Kunststoff besteht, z.B. aus Polytetrafluorethylen.

5. Rauchgasführung nach einem der Ansprüche 1 bis 4, dadurch gekennzeichnet, dass die Rauchgasleitung (4) zum Zweck der wiederholten Strömungsumlenkung eine Mehrzahl von plötzlichen Richtungsänderungen, d.h. Schikanen, aufweist.

**6.** Rauchgasführung nach einem der Ansprüche 1 bis 5, dadurch gekennzeichnet, dass mindestens eine Düse (7) vorgesehen ist, mittels welcher Wasser in die Rauchgasleitung (1) einsprühbar ist.

**7.** Rauchgasführung nach Anspruch 6, dadurch gekennzeichnet, dass ein Wasserabscheider (8) vorgesehen ist, um das Eingesprühte Wasser mit dem durch die Abkühlung entstandenen Kondensat wieder aus der Rauchgasleitung (1) zu entfernen.

**8.** Rauchgasführung nach Anspruch 7, dadurch gekennzeichnet, dass die Rauchgasleitung (1) vom Bereich des Wasserabscheiders (8) annähernd vertikal nach oben geführt ist.

**9.** Rauchgasleitung nach Anspruch 8, dadurch gekennzeichnet, dass das vertikale Teilstück zick-zack-förmig gestaltet ist und Tropfenabscheider dient, wobei am oberen Ende dieses vertikalen Teilstücks, zum Weitertransport des Reingases, ein Sauggebläse (9) angeordnet ist.

**10.** Rauchgasführung nach Anspruch 7, dadurch gekennzeichnet, dass dem Wasserabscheider (8) ein Filter (10) zugeordnet ist, zum Ausfiltern und/oder chemischen Umwandeln der im Rauchgas enthaltenen Giftstoffe.

# FIG.1

FIG. 2

FIG. 3